## Europäisches Patentamt
## European Patent Office
## Office européen des brevets

(19)

(11) Veröffentlichungsnummer: **0 145 838**
**B1**

# EUROPÄISCHE PATENTSCHRIFT

(12)

(45) Veröffentlichungstag der Patentschrift:
16.03.88

(21) Anmeldenummer: **84109555.7**

(22) Anmeldetag: **10.08.84**

(51) Int. Cl.⁴: **G 06 M 1/272,** G 06 K 19/06,
G 06 K 7/10

(54) **Anordnung zur Darstellung und Abtastung des Inhalts von Zahlenrollen-Zählwerken.**

(30) Priorität: **03.11.83 CH 5943/83**

(43) Veröffentlichungstag der Anmeldung:
**26.06.85 Patentblatt 85/26**

(45) Bekanntmachung des Hinweises auf die Patenterteilung:
**16.03.88 Patentblatt 88/11**

(84) Benannte Vertragsstaaten:
**AT DE FR GB NL**

(56) Entgegenhaltungen:
**EP-A-0 124 434**
**CH-A-589 326**
**DE-A-2 530 121**
**DE-A-3 010 940**
**GB-A-815 124**
**GB-A-2 018 069**
**US-A-3 112 152**
**US-A-3 815 084**

**IBM TECHNICAL DISCLOSURE BULLETIN, Band 20,**
**Nr.6, November 1977, S.2197-2198, New York, US;**
**HERRING et al.: "Wafer Identification System"**

(73) Patentinhaber: **LGZ LANDIS & GYR ZUG AG, CH-6301 Zug (CH)**

(72) Erfinder: **Antes, Gregor, Moussonstr. 14, CH- 8044 Zürich (CH)**
Erfinder: **Halder, Mathis, Untere Rainstr. 18, CH-6340 Baar (CH)**
Erfinder: **Fuchs, Paul, Haltikerstr. 41, CH- 6403 Küssnacht (CH)**
Erfinder: **Gehr, Peter, Alpenstr. 7, CH- 6330 Cham (CH)**

**Beschreibung**

Die Erfindung bezieht sich auf eine Anordnung zur optischen Darstellung und optoelektrischen Abtastung des Inhalts von Zahlenrollen-Zählwerken der im Obergegriff des Anspruchs 1 genannten Art.

Es ist eine Anordnung dieser Art bekannt (GB-A 2 018 069), bei der zur Darstellung des Inhalts von Zahlenrollen-Zählwerken von beispielsweise Elektrizitätszählern den jeweiligen Zahlen der Zahlenrollen optische Markierungen zugeordnet sind, welche jeweils aus vier Einzelstrichen bestehen. Die unterschiedliche Strichdicke ermöglicht die Auswahl eines bestimmten Codes. Die Abtastung des reflektierenden Strichmusters erfolgt mittels eines Lichtgriffels (light pen), der längs der Reihe der Einzelstriche entlang geführt wird, weshalb die vier Einzelstriche jeder Einzelmarkierung in derselben Abtastrichtung nacheinander anzuordnen sind. Diese Art der Markierung verlangt eine verhältnismässig grosse Gesamtfläche, so dass auf der Mantelfläche der Zahlenrollen nur noch eine kleine freie Fläche für die visuell lesbaren Zahlen übrigbleibt und das visuelle Auslesen des Zählwerk-Inhalts erheblich erschwert wird. Die ins Auge fallenden Markierungen stören auch die ästhetische Wirkung des Zählwerkes.

Es ist auch bekannt (EP-A-0 060 937), als Markierungen beugungsoptische Elemente, wie Hologramme oder Beugungsgitter, zu verwenden, die in eine transparente Folie geprägt sind und die Zahlen der Zahlenrollen überdecken, wobei die Zahlen durch die Hologramme oder Beugungsgitter hindurch sichtbar sind. Das Auslesen des durch solche beugungsoptische Elemente dargestellten Zählwerk-Inhalts bedingt jedoch, dass Lichtsender und Lichtempfänger in vorbestimmten Raumwinkeln angeordnet werden, und kann daher nicht ohne weiteres mittels eines durch die menschliche Hand geführten Lichtgriffels erfolgen.

Ferner ist eine Anordnung zur Darstellung und Abtastung des Inhalts von Zahlenrollen-Zählwerken bekannt (GB-A-815 124), bei der einerseits photoelektrisch abtastbare, codierte optische Markierungen und andererseits visuell lesbare Zahlen in einer solchen Farbe gehalten sind, dass sich die codierten Markierungen vom Hintergrund photoelektrisch unterscheiden, die Zahlen jedoch vom Hintergrund zwar visuell, nicht aber photoelektrisch abheben. Dadurch wird erreicht, dass die photoelektrischen Abtastmittel nur auf die codierten Markierungen ansprechen und die visuell lesbaren Zahlen die photoelektrischen Abtastmittel nicht beeinflussen. Hierbei ist es nicht erforderlich, dass die visuell lesbaren Zahlen oder die codierten Markierungen durchsichtig sind.

Ausserdem ist es bekannt (US-A-4 085 314), codierte Markierungen, die beispielsweise zur Kennzeichnung von Kolonialwaren dienen, aus retroreflektierendem Material herzustellen. Schliesslich wurden codierte Markierungen aus retroreflektierendem Material auch schon in einem Adressiersystem zur Identifikation von Fahrzeugen eingesetzt (US-A-3 815 084).

Der Erfindung liegt die Aufgabe zugrunde, eine Anordnung der eingangs genannten Art dahingehend zu verbessern, dass die Markierungen auf den Zahlenrollen für sich allein keinen Platz beanspruchen, das dem Betrachter erscheinende Zahlenbild nicht stören und trotzdem eine universelle und zuverlässige Abtastung ermöglichen.

Die Lösung dieser Aufgabe gelingt durch die im Kennzeichen der Ansprüche 1 und 2 angegebenen Merkmale. Vorteilhafte weiterbildungen der Erfindung ergeben sich aus den Unteransprüchen.

Codierte optische Markierungen, bei denen gemäss den Ansprüchen 4 bis 6 die Winkellage von Flächenelementen eine numerische Information beinhaltet, sind an sich bekannt (US-A-3 112 152).

Nachfolgend werden Ausführungsbeispiele der Erfindung anhand der Zeichnung näher erläutert.

Es zeigen:

Fig. 1 eine Prinzipdarstellung eines Zählwerkes,

Fig. 2 die Randzone einer Zahlenrolle im Schnitt,

Fig. 3 ein weiteres Zählwerk,

Fig. 4 eine Prinzipdarstellung der Abtastung mittels eines Lichtgriffels,

Fig. 5 eine stark vergrösserte Darstellung der Markierungen und

Fig. 6 ein Impulsdiagramm.

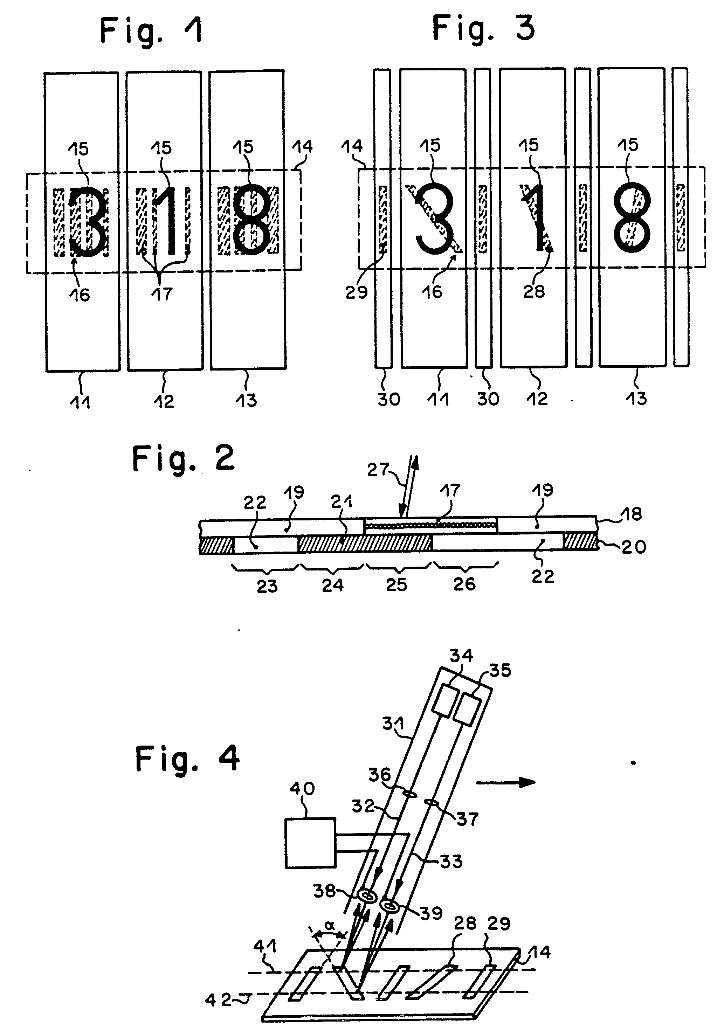

In der Fig. 1 bedeuten 11 bis 13 Zahlenrollen eines Zählwerkes, das z. B. in einem Elektrizitätszähler hinter einem Zählwerkfenster 14 angeordnet werden kann. Jede der Zahlenrollen 11 bis 13 trägt auf ihrer Mantelfläche Zahlen 15, z. B. die Zahlen 0, 1, 2...9 oder 00, 10, 20...90. Aus Gründen der zeichnerischen Einfachheit ist in der Fig. 1 jeweils nur jene der Zahlen 15 der Zahlenrollen 11 bis 13 dargestellt, die im Zählwerkfenster 14 sichtbar ist. Der jeweilige Inhalt (Zählwerkstand) kann durch das Zählwerkfenster 14 hindurch von Auge abgelesen werden.

Jeder Zahl 15 der Zahlenrollen 11 bis 13 ist eine codiert, optisch, Markierung 16 zugeordnet die im Beispiel der Fig. 1 aus jeweils vier balkenförmigen optischen Flächenelementen 17 unterschiedlicher Breite besteht. Die Markierungen 16 bzw. ihre Flächenelemente 17 befinden sich auf der Mantelfläche der Zahlenrollen 11 bis 13 über den Zahlen 15, das heisst sie überdecken die Zahlen 15 mindestens teilweise. Die Markierungen 16 verschiedener Zahlenrollen 11 bis 13 sind - wie die Zahlen 15 - in je einer Reihe angeordnet. Einfachheitshalber sind in der Fig. 1 nur jene der Markierungen 16 gezeichnet, die im Zählwerkfenster 14 erscheinen.

Mittels eines nicht dargestellten Lichtgriffels, der einen Lichtsender und einen Lichtempfänger enthält und dessen Spitze manuell, z. B. von links nach rechts, über das Zählwerkfenster 14 und somit entlang der Reihe der Markierungen 16 bewegt wird, werden die Markierungen 16 in bekannter Weise abgetastet. Der Lichtempfänger ist an eine elektrische Auswerteschaltung angeschlossen, in welcher die elektrischen Signale des Lichtempfängers decodiert und der Inhalt des Zählwerkes gespeichert wird.

Die optischen Flächenelemente 17 der Markierungen 16 bestehen aus einem teildurchlässigen retroreflektierenden Material, so dass die Zahlen 15 bei diffuser Beleuchtung durch die Flächenelemente 17 hindurch sichtbar sind, während ein Anteil des gerichteten Abtastlichtstrahls des Lichtgriffels an den Flächenelementen 17 innerhalb eines Raumwinkels von etwa 4° retroreflektiert wird und auf den Lichtempfänger des Lichtgriffels zurückfällt. Bei diffuser Beleuchtung sind daher die Markierungen 16 bzw. ihre Flächenelemente 17 von Auge kaum sichtbar und stören daher das sich dem Auge darbietende Zahlenbild nicht. Der retroreflektierte Anteil des gerichteten Abtastlichtstrahls kann dagegen zuverlässig detektiert werden.

Anhand der Fig. 2 soll das Verständnis der Erfindung weiter vertieft werden. Mit 18 ist in der Fig. 2 die äussere Mantelschicht der Zahlenrollen 11 bis 13 bezeichnet, welche die retroreflektierenden Flächenelemente 17 enthält. Die nicht mit Flächenelementen 17 belegten Bereiche der Mantelfläche der Zahlenrollen 11 bis 13 können frei bleiben oder gemäss der Fig. 2 mit einer transparenten, vorzugsweise matten Schicht 19 beschichtet sein, welche gleich dick ist wie die retroreflektierenden Flächenelemente 17, so dass sich eine ebene Mantelfläche ergibt. Unter der äusseren Mantelschicht 18 liegt eine innere Mantelschicht 20, in welche die Zahlen 15 (Fig. 1) eingeschrieben sind und die dem nach aus z. B. schwarzen Flächenbereichen 21 und weissen, diffus reflektierenden Flächenbereichen 22 besteht.

Die Überlagerung der retroreflektierenden Flächenelemente 17 und der Zahlen 15 ergibt vier verschiedene optische Bereiche 23 bis 26. Der Bereich 23 enthält die transparente Schicht 19 und einen weissen Flächenbereich 22; der Bereich 24 enthält die transparente Schicht 19 und einen schwarzen Flächenbereich 21; der Bereich 25 enthält ein retroreflektierendes Flächenelement 17 und einen schwarzen Flächenbereich 21; der Bereich 26 enthält ein retroreflektierendes Flächenelement 17 und einen weissen Flächenbereich 22.

Die Bereiche 23, 26 erscheinen dem Auge weiss und die Bereiche 24, 25 schwarz. Das retroreflektierende Flächenelement 17 stört bei diffuser Beleuchtung das Zahlenbild insbesondere dann nicht, wenn die Schicht 19 matt ist und diffuses Licht ähnlich streut wie das retroreflektierende Flächenelement 17.

In den Bereichen 25 und 26 wird ein gerichteter Abtaststrahl 27 retroreflektiert. Diese Bereiche erscheinen dem Lichtempfänger des Lichtgriffels hell. Die Bereiche 23 und 24 dagegen erscheinen dem Lichtempfänger dunkel, da sie den Abtastlichtstrahl 27 streuen.

Vorzugsweise besteht die äussere Mantelschicht 18 aus einer einzigen matten, teildurchlässigen Kunststoffolie, die entsprechend dem Code der Markierungen 16 zonenweise retroreflektierend ist und z. B. auf die Mantelfläche der Zahlenrollen 11 bis 13 aufgeklebt ist.

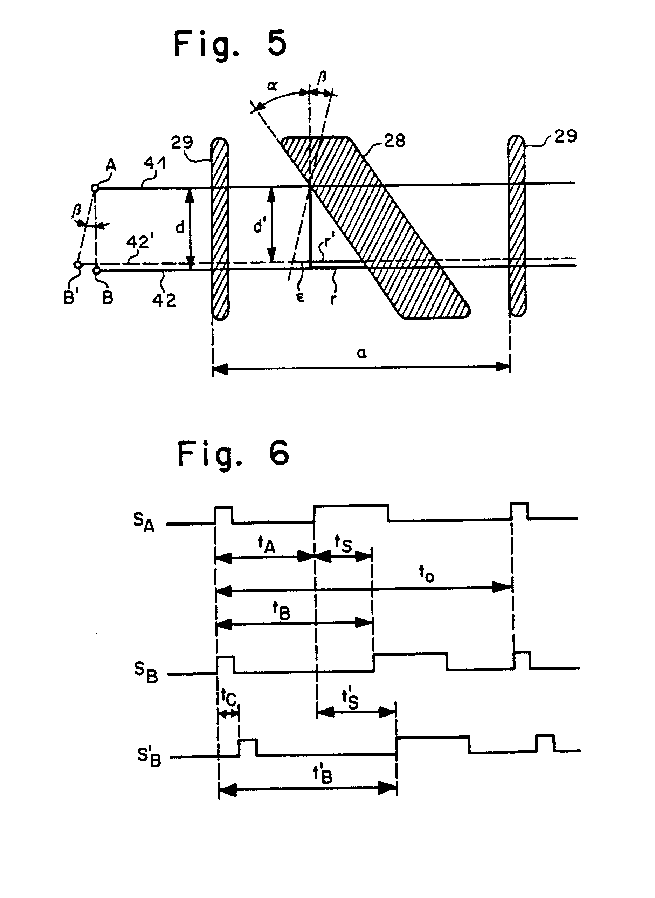

In der Fig. 3 weisen gleich Bezugszahlen wie in der Fig. 1 auf gleiche Teile hin. Jede der Markierungen 16 besteht hier aus einem einzigen balkenförmigen retroreflektierenden Flächenelement 28, dessen Winkellage (Winkel α in den Fig. 4 und 5) die zugeordnete Zahl darstellt. In der Reihe der durch das Zählwerkfenster 14 hindurch abtastbaren Markierungen 16 sind feststehende, ebenfalls balkenförmige und retroreflektierende Referenzmarkierungen 29 vorgesehen, die im dargestellten Beispiel parallel zur Stirnfläche der Zahlenrollen 11 bis 13 orientiert sind und jeweils auf einem Blendensteg 30 zwischen je zwei Zahlenrollen sowie am Anfang und Ende der Zahlenrollen-Reihe angeordnet sind.

Zum Abtasten des Inhalts des Zahlenrollen-Zählwerkes nach der Fig. 3 dient ein in der Fig. 4 mit 31 bezeichneter Lichtgriffel, der zum Aussenden und Empfangen zweier paralleler Abtaststrahlen 32, 33 eingerichtet ist und zu diesem Zweck zwei Lichtquellen (z. B. Halbleiterlaser) 34, 35, zwei Linsensysteme 36, 37 sowie zwei Lichtempfänger 38, 39 aufweist. Anstelle zweier Lichtquellen 34, 35 können auch eine einzige Lichtquelle und ein Strahlenteiler verwendet werden. Die Lichtempfänger 38, 39 sind an eine Auswerteschaltung 40 angeschlossen. Beim Abtasten wird der Lichtgriffel 31 manuell in Pfeilrichtung über das Zählwerkfenster 14 geführt, so dass die beiden Abtaststrahlen 32, 33 die in einer Reihe liegender Referenzmarkierungen 29 und Flächenelemente 26 in zwei parallelen Abtastspuren 41, 42 abtasten.

Anhand der Fig. 5 und 6 wird die Arbeitsweise der Auswerteschaltung 40, die vorzugsweise einen Mikrocomputer aufweist, näher erläutert. In der Fig. 5 bedeutet A den Lichtpunkt des Abtaststrahls 32 auf der Abtastspur 41 und B den Lichtpunkt des Abtaststrahls 33 auf der Abtastspur 42 für den Fall, dass die Verbindungslinie A-B senkrecht zu den Abtastspuren 41, 42 und somit parallel zu den Referenzmarkierungen 29 liegt, was dadurch erzwungen werden kann, dass auf dem Zählwerkfenster 14 geeignete Führungsmittel für den Lichtgriffel 31 angeordnet sind. Mit d ist der Abstand der Abtastspuren 41, 42, mit r die Wegdifferenz der Lichtpunkte A, B beim Abtasten eines Flächenelementes 28 und mit a der Abstand zweier Referenzmarkierungen 29 bezeichnet.

Das vom Lichtempfänger 38 bzw. 39 erzeugte und in der Auswerteschaltung 40 mittels eines Schwellenschalters geformte elektrische Signal $S_A$ bzw. $S_B$ ist in der Fig. 6 dargestellt. Mit $t_A$ bzw. $t_B$ ist der Zeitabstand zwischen einem durch eine Referenzmarkierung 29 verursachten Impuls und einem durch ein nachfolgendes Flächenelement 28 verursachten Impuls und mit $t_0$ der Zeitabstand zweier durch zwei benachbarte Referenzmarkierungen 29 verursachten Impulse bezeichnet. Es ist $r = d . tg \alpha$ und $t_A - t_B = t_S$. Damit ergibt sich folgende Beziehung:

$$> r \frac{t_A}{t_0} - \frac{t_B}{t_0} = \frac{t_S}{t_0} = \frac{d}{a} = \frac{d}{a} . tg \alpha \quad (1)$$

Da d und a konstante Grössen sind, kann der Winkel α aus den gemessenen Werten für $t_S$ und $t_0$ berechnet werden.

Ist beim Abtastvorgang der Lichtgriffel 31 um den Winkel β (Fig. 5) gegenüber der Senkrechten zu den Abtastspuren 41, 42 verdreht, so wandert der Lichtpunkt B zum Lichtpunkt B'. Der Abstand d' der Abtastspuren 41, 42′ ist dann d′ = d.cos $\beta$ und die Wegdifferenz r′ ist r′ = d′.tg $\alpha$ = d.cos $\beta$.tg $\alpha$. Durch die seitliche Verschiebung des Lichtpunktes B′ gegenüber dem Lichtpunkt B entsteht eine zusätzliche Wegdifferenz $\varepsilon$ = d.sin $\beta$, die sich in einer Zeitverzögerung $t_C$ im Signal $S_B$′ äussert. Somit gilt:

$$> r \frac{t_A}{t_0} - \frac{t_B'}{t_0} = \frac{t_S'}{t_0} = \frac{r' + \varepsilon}{a} = \frac{d}{a} (\sin \beta + \text{tg } \alpha. \cos t \, \beta) \ (2)$$

Für den Winkel $\beta$ gilt:

$$> r \sin \beta = \frac{a}{d} . \frac{t_C}{t_0} \ (3)$$

Die Auswerteschaltung 40 ermittelt aus den Signalen $S_A$ und $S_B$′ die Zeitabstände $t_A$, $t_B$′, $t_C$ und $t_0$, berechnet gemäss den Gleichungen (2) und (3) den Winkel $\alpha$ der Flächenelemente 28, ermittelt die dem Winkel $\alpha$ zugeordnete Zahl der betreffenden Zahlenrolle 11 bis 13 und speichert den so ausgelesenen Inhalt des Zählwerkes.

Zur Messung der verschiedenen Zeitabstände werden vorteilhaft nicht, wie oben der Einfachheit halber beschrieben, nur die ansteigenden Flanken der Signale $S_A$ und $S_B$ bzw. $S_B$′, sondern auch die abfallenden Flanken erfasst und aus diesen beiden Zeitpunkten der Mittelwert gebildet. Dadurch kann die Sicherheit der Abtastung erhöht werden. Ferner ist es vorteilhaft, auf jedem Blendensteg 30 (Fig. 3) zwei in Abtastrichtung aufeinanderfolgende Referenzmarkierungen 29 anzuordnen, was gestattet, den Mittelwert aus vier Signalflanken zu bilden.

Die beschriebene Darstellung der Zahlen 15 durch jeweils ein einziges balkenförmiges Flächenelement 28 hat den Vorteil einer besonders einfachen Codierung und ergibt eine optimale Ausnützung des auf den Zahlenrollen 11 bis 13 zur Verfügung stehenden Platzes.

Geeignetes Material für die teildurchlässigen retroreflektierenden Flächenelemente 17, 28 ist in Form von Kunststoffolien im Handel erhältlich. An einer solchen Kunststoffolie wird der Abtastlichtstrahl 27, 32 oder 33 in einen retroreflektierten Strahl (Raumwinkel etwa 4°), einen diffus reflektierten Anteil und einen die Kunststoffolie transmittierenden Strahl aufgespalten, wobei die Intensität des retroreflektierten Strahls in der Grössenordnung von etwa 3 % und jene des diffus reflektierten Anteils in der Grössenordnung von etwa 17 % liegt. Der die Kunststoffolie, d.h. die Flächenelemente 17, 28 transmittierende Anteil (Intensität etwa 80 %) wird in der inneren Mantelschicht 20 (Fig. 2) absorbiert bzw. an ihr diffus gestreut.

Die allgemeine erfinderische Idee, welche der anhand der Fig. 1 bis 3 beschriebenen Erfindung zugrunde liegt, lässt sich auch dadurch verwirklichen, dass die Zahlen 15 aus einem teildurchlässigen Material und die optischen Flächenelemente 17, 28 aus einem retroreflektierenden, vorzugsweise lichtundurchlässigen Material bestehen und die Zahlen 15 die optischen Flächenelemente 17, 28 mindestens teilweise überdecken. Bei diffuser Beleuchtung sind dann die Zahlen 15 auf dem Hintergrund der teilweise mit optischen Flächenelementen 17, 28 belegten Mantelfläche der Zahlenrollen 11 bis 13 sichtbar. Der gerichtete Abtastlichtstrahl 27, 32, 33 wird dagegen an den optischen Flächenelementen 17, 28 retroreflektiert und kann mit Hilfe des Lichtgriffels 31 zuverlässig detektiert werden. Die retroreflektierenden Flächenelemente 17, 28 stören das Zahlenbild insbesondere dann nicht, wenn die nicht mit solchen Flächenelementen belegten Bereiche der Mantelfläche der Zahlenrollen 11 bis 15 matt sind und diffuses Licht ähnlich streuen wie die Flächenelemente 17, 28.

**Patentansprüche**

1. Anordnung zur optischen Darstellung und optoelektrischen Abtastung des Inhalts von Zahlenrollen-Zählwerken, bei der jeder Zahl (15) der Zahlenrollen (11 bis 13) eine aus einem oder mnehreren optischen Flächenelementen (17; 28) bestehende codierte optische Markierung (16) zugeordnet ist, je eine Markierung (16) verschiedener Zahlenrollen (11 bis 13) in je einer Reihe angeordnet sind und die Markierungen (16) einer Reihe mittels eines entlang der Reihe bewegbaren Lichtgriffels (31) abtastbar sind, dadurch gekennzeichnet, dass die optischen Flächenelemente (17; 28) die Zahlen (15) mindestens teilweise überdecken und aus einem teildurchlässigen retroreflektierenden Material bestehen, so dass die Zahlen (15) bei diffuser Beleuchtung durch die optischen Flächenelemente (17; 28) hindurch sichtbar sind, ein gerichteter Abtastlichtstrahl (27; 32; 33) dagegen an den optischen Flächenelementen (17; 28) retroreflektiert wird.

2. Anordnung nach dem Oberbegriff des Anspruchs 1, dadurch gekennzeichnet, dass die Zahlen (15) aus einem teildurchlässigen Material und die optischen Flächenelemente (17; 28) aus einem retroreflektierenden Material bestehen und dass die Zahlen (15) die optischen Flächenelemente (l7; 28) mindestens teilweise überdecken, so dass die Zahlen (15) bei diffuser Beleuchtung auf dem Hintergrund der teilweise mit optischen Flächenelementen (17; 28) belegten Mantelfläche der Zahlenrollen (11 bis 13) sichtbar sind, ein gerichteter Abtastlichtstrahl (27; 32; 33) dagegen an den optischen Flächenelementen (17; 28) retroreflektiert wird.

3. Anordnung nach Anspruch 1 oder 2, dadurch gekennzeichnet, dass die Mantelfläche der Zahlenrollen (11 bis 13) mit einer matten Kunststoffolie (18) beschichtet ist, die zonenweise retroreflektierend ist.

4. Anordnung nach einem der Ansprüche 1 bis 3, dadurch gekennzeichnet, dass jede Markierung (16) aus einem einzigen balkenförmigen Flächenelement (28) besteht, dessen Winkellage ($\alpha$) die zugeordnete Zahl (15) darstellt, und dass in der Reihe der abtastbaren Markierungen (16) feststehende balkenförmige retroreflektierende Referenzmarkierungen (29) angeordnet sind.

5. Anordnung nach Anspruch 4, dadurch gekennzeichnet, dass der Lichtgriffel (31) zum Aussenden und Empfangen zweier paralleler Abtastlichtstrahlen (32; 33) eingerichtet ist und zwei Lichtempfänger (38; 39) aufweist, die an eine Auswerteschaltung (40) zur Ermittlung der Winkellage ($\alpha$) der Flächenelemente (28) angeschlossen ist.

6. Anordnung nach Anspruch 5, dadurch gekennzeichent, dass die Auswertschaltung (40) einen Mikrocomputer zur Berechnung der Winkellage ($\alpha$) aus den Zeitabständen ($t_A$; $t_B$; $t_B'$; $t_C$; $t_o$) der Impulsflanken der elektrischen Signale ($S_A$; $S_B$; $S_B'$) der Lichtempfänger (38; 39) aufweist.

**Claims**

1. An arrangement for the optical representation and optoelectrical scanning of the content of digit drum-type counting mechanisms in which each digit (15) of the digit drums (11 to 13) has associated therewith a coded optical marking (16) comprising one or more optical surface elements (17; 28), respective markings (16) of different digit drums (11 to 13) are arranged in respective rows and the markings (16) of a row can be scanned by means of a light pencil (31) which is movable along the row, characterised in that the optical surface elements (17; 28) at least partially cover over the digits (15) and comprise a partly translucent retroreflecting material so that with diffuse illumination the digits (15) are visible through the optical surface elements (17; 28) whereas a directed scanning light beam (27; 32; 33) is retro-reflected at the optical surface elements (17; 28).

2. An arrangement according to the classifying portion of claim 1 characterised in that the digits (15) comprise a partly translucent material and the optical surface elements (17; 28) comprise a retroreflecting material and that the digits (15) at least partially cover over the optical surface elements (17; 28) so that with diffuse illumination the digits (15) are visible on the background of the peripheral surface of the digit drums (11 to 13), which surface is partially covered with optical surface elements (17; 28), whereas a directed scanning light beam (27; 32; 33) is retro-reflected at the optical surface elements (17; 28).

3. An arrangement according to claim 1 or claim 2 characterised in that the peripheral surface of the digit drums (11 to 13) is covered with a mat plastics foil (18) which is retro-reflecting in a zone-wise manner.

4. An arrangement according to one of claims 1 to 3 characterised in that each marking (16) comprises a single barshaped surface element (28) whose angular position ($\alpha$) represents the associated digit (15) and that stationary bar-shaped retroreflecting reference markings (29) are arranged in the row of scannable markings (16).

5. An arrangement according to claim 4 characterised in that the light pencil (31) is designed to emit and receive two parallel scanning light teams (32; 33) and has two light receivers (38; 39) which are connected to an evaluation circuit (40) for ascertaining the angular position ($\alpha$) of the surface elements (28).

6. An arrangement according to claim 5 characterised in that the evaluation circuit (40) has a microcomputer for calculating the angular position ($\alpha$) from the spacings in time ($t_A$; $t_B$; $t_B'$; $t_C$; $t_o$) of the edges of the pulses of the electrical signals ($S_A$; $S_B$; $S_B'$) of the light receivers (38; 39).

**Revendications**

1. Dispositif pour la représentation optique et la lecture optoélectronique du contenu de totalisateurs à rouleaux, dans lequel une marque optique codée (16), constituée par un ou plusieurs éléments de surface optiques (17; 28), est affectée à chaque nombre (15) des rouleaux (11 à 13); une marque (16) des divers rouleaux (11 à 13) est disposée suivant une rangée, et les marques (16) d'une rangée sont lisibles à l'aide d'un photostyle (31) déplacé le long de la rangée, ledit dispositif étant caractérisé en ce que les éléments de surface optiques (17; 28) recouvrent au moins partiellement les nombres (15) et sont constitués par un matériau rétroréfléchissant semi-transparent, de sorte que les nombres (15) sont visibles à travers les éléments de surface optiques (17; 28) sous éclairage diffus, tandis qu'un pinceau lumineux dirigé de lecture (27; 32; 33) est rétroréfléchi sur les éléments de surface optiques (17; 28).

2. Dispositif selon le préambule de la revendication 1, caractérisé en ce que les nombres (15) sont constitués par un matériau semi-transparent et les éléments de surface optiques (17; 28) par un matériau rétroréfléchissant; et les nombres (15) recouvrent au moins partiellement les éléments de surface optiques (17; 28), de sorte que sous éclairage diffus, les nombres (15) sont visibles sur le fond de la surface enveloppe des rouleaux (11 à 13) partiellement occupée par des éléments de surface optiques (17; 28), tandis qu'un pinceau lumineux dirigé de lecture (27; 32; 33) est rétroréfléchi sur les éléments de surface optiques (17; 28).

3. Dispositif selon une des revendications 1 ou 2, caractérisé en ce que la surface enveloppe des rouleaux (11 à 13) est recouverte d'un film plastique mat (18), présentant des zones rétroréfléchissantes.

4. Dispositif selon une quelconque des revendications 1 à 3, caractérisé en ce que chaque marque (16) est constituée par un seul élément de surface (28) sous forme d'une barre dont la position angulaire ($\alpha$) représente le nombre correspondant (15); et des marques de référence (29) rétroréfléchissantes, fixes, sont disposées sous forme de barres dans la rangée des marques (16) lisibles.

5. Dispositif selon revendication 4, caractérisé en ce que le photostyle (31) est équipé pour l'émission et la réception de deux pinceaux lumineux parallèles de lecture (32; 33) et comprend deux photorécepteurs (38; 39) qui sont reliés à un circuit de décodage (40) pour la détermination de la position angulaire ($\alpha$) des éléments de surface (28).

6. Dispositif selon revendication 5, caractérisé en ce que le circuit de décodage (40) comprend un micro-ordinateur pour le calcul de la position angulaire ($\alpha$) à partir des intervalles de temps ($t_A$; $t_B$; $t_B'$; $t_C$; $t_o$) entre les fronts des impulsions des signaux électriques ($S_A$; $S_B$; $S_B'$) des photorécepteurs (38; 39).

Fig. 1

Fig. 3

Fig. 2

Fig. 4

# Fig. 5

# Fig. 6